# EUROPEAN PATENT APPLICATION

(11) **EP 2 871 910 A1**
(43) Date of publication of application: **13.05.2015**
(21) Application number: 12877428.8
(22) Date of filing: 21.05.2012
(51) Int. Cl.: H04W 88/04, H04W 40/22

(54) **COMMUNICATION METHOD AND SYSTEM, ACCESS NETWORK DEVICE, TERMINAL, AND CORE NETWORK DEVICE**

(71) Applicant: Huawei Technologies Co., Ltd., Longgang District Shenzhen, Guangdong 518129 (CN)
(72) Inventor: WANG, Yan, Shenzhen Guangdong 518129 (CN); LIANG, Jitian, Shenzhen Guangdong 518129 (CN); CHENG, Yong, Shenzhen Guangdong 518129 (CN); HE, Yongguang, Shenzhen Guangdong 518129 (CN)
(74) Representative: Epping - Hermann - Fischer
(86) International application number: PCT/CN2012/075826
(87) International publication number: WO 2013/173962

(57) **Abstract**

Embodiments of the present invention provide a communications method, a communications system, an access network device, a terminal, and a core network device. For all UEs accessing the access network device, before relay node selection is performed, it is determined which UEs are capable of serving as candidate relay nodes, so as to perform a relay node selection operation only on the UEs that are capable of serving as candidate relay nodes when performing the relay node selection, thereby saving operation overhead, reducing time and resources overhead during the relay node selection, and improving transmission efficiency.

## Description

### TECHNICAL FIELD

The present invention relates to the field of communications, and in particular, to a communications method, a communications system, an access network device, a terminal, and a core network device.

### BACKGROUND

In the field of communications, in order to extend the coverage of a wireless network, a relay (relay) technology is introduced. The so-called relay technology refers to a technology of forwarding or amplifying a signal between a source end and a destination end so that the signal can reach the destination end through multiple times of transmission (also referred to as multi-hop). A node disposed for forwarding or amplifying a signal is referred to as a relay node.

Currently, the relay technology develops from the fixed relay technology without any service requirement to the user cooperative relay technology having service requirements.

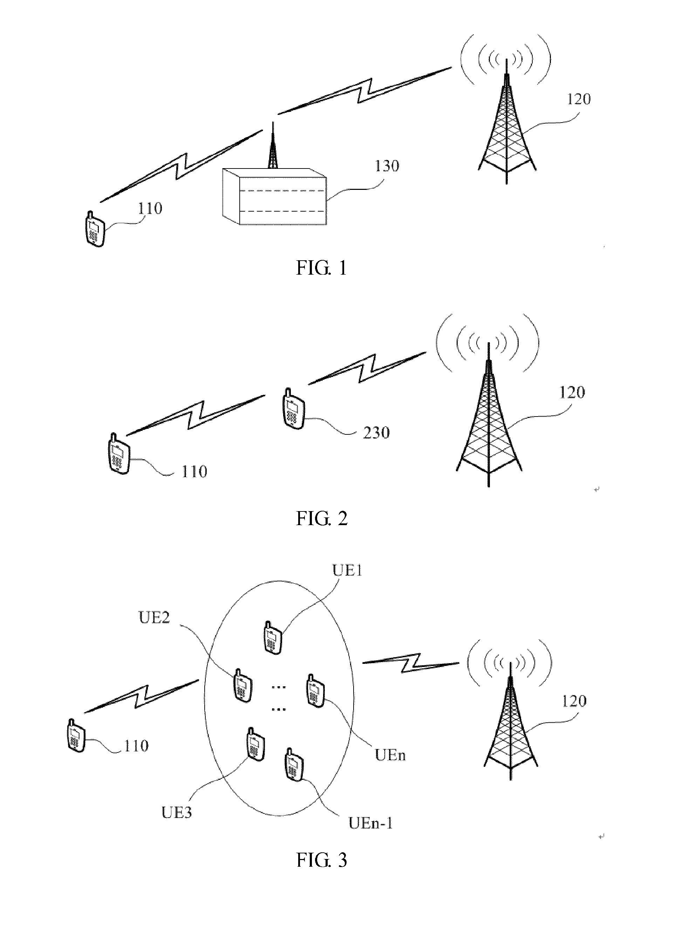

Referring to FIG. 1, a schematic structural diagram of a fixed relay transmission system is shown. As shown in FIG. 1, the system includes a user equipment (user equipment, UE) 110 and a base station (base station) 120. In order to forward or amplify a signal between the UE 110 and the base station 120, a relay station (relay station) 130 is disposed between the UE 110 and the base station 120, so as to extend the coverage of the base station 120, where the relay station 130 is a fixed relay node (relay node, RN).

Referring to FIG. 2, a schematic structural diagram of a user cooperative relay transmission system is shown, and a difference between the system shown in FIG. 2 and the system shown in FIG. 1 lies in that the relay node can be implemented by using a mobile UE 230, and therefore the disposition of a relay station can be omitted, thereby reducing the cost; meanwhile, because of the mobility of the UE, the relay becomes more flexible.

Generally, more than one UE exists in the coverage of a base station, so a problem of how to select a relay node from the multiple UEs is involved. In the prior art, all UEs accessing the base station are traversed by using a certain algorithm, and an optimal UE is selected to serve as the relay node. The method for selecting the relay node requires traversing all the UEs accessing the base station, requires large time and resources overhead, and has low transmission efficiency. Especially, along with the increasing number of UEs accessing the base station, the problem becomes much more apparent.

### SUMMARY

Embodiments of the present invention provide a communications method, a communications system, an access network device, a terminal, and a core network device, so as to reduce time and resources overhead during relay node selection and improve transmission efficiency.

According to one aspect, a communications method is provided, which includes: obtaining, by an access network device, information of a first user equipment; determining, according to the information of the first user equipment, that the first user equipment is capable of serving as a candidate relay node; and selecting the first user equipment to serve as a relay node, where the relay node is used to forward data between the access network device and a second user equipment.

According to another aspect, a communications method is provided, which includes: sending, by a first user equipment, a relay indication to an access network device, where the first user equipment has a relay capability, and the relay indication is used to instruct the access network device to determine the first user equipment as a candidate relay node; and if the first user equipment is selected by the access network device to serve as a relay node, forwarding, by the first user equipment, data transmitted between the access network device and a second user equipment.

According to another aspect, a communications method is provided, which includes: receiving, by a core network device, a user equipment identifier of a user equipment sent by an access network device; and sending, according to the user equipment identifier, a response message to the access network device, where the response message is used as a basis for the access network device to determine the user equipment as a candidate relay node.

According to still another aspect, an access network device is provided, which includes: a receiving unit, configured to obtain information of a first user equipment; a determining unit, configured to determine, according to the information of the first user equipment, that the first user equipment is capable of serving as a candidate relay node; and a selecting unit, configured to select the first user equipment to serve as a relay node, where the relay node is used to forward data between the access network device and a second user equipment.

According to yet another aspect, a user equipment is provided, which includes a receiver, a transmitter, and a processor. The receiver and the transmitter are connected to the processor; the processor is configured to send a relay indication to an access network device through the transmitter, where the relay indication is used to instruct the access network device to determine the user equipment as a candidate relay node; if the user equipment is selected by the access network device to serve as a relay node, when forwarding data transmitted between the access network device and another user equipment, the receiver is configured to receive data sent by the access network device or the other user equipment; and the transmitter is configured to send the data received by the receiver to the other user equipment or the access network device.

According to yet another aspect, a core network device is provided, which includes: a receiver, configured to receive a user equipment identifier of a user equipment sent by an access network device; a transmitter, configured to send a response message to the access network device; and a processor, configured to generate the response message according to the user equipment identifier, where the response message is used as a basis for the access network device to determine the user equipment as a candidate relay node.

According to still another aspect, a communications system is further provided, which includes: a first user equipment, the access network device, and a second user equipment.

According to still another aspect, a computer program product is further provided, which includes a computer readable medium, including a group of program codes and configured to execute any of the communications methods.

It can be seen that an access network device first determines, according to the information of a UE, whether the UE is capable of serving as a candidate relay node, and then, during relay node selection, a relay node selection operation is performed only on UEs that are capable of serving as candidate relay nodes, thereby saving operation overhead, reducing time and resources overhead during the relay node selection, and improving transmission efficiency.

### BRIEF DESCRIPTION OF DRAWINGS

To illustrate the technical solutions according to the embodiments of the present invention or in the prior art more clearly, the following briefly introduces accompanying drawings required for describing the embodiments or the prior art. Apparently, the accompanying drawings in the following description are only some embodiments of the present invention, and persons of ordinary skill in the art can derive other drawings from the accompanying drawings without creative efforts.
FIG. 1 is a schematic structural diagram of a fixed relay transmission system in the prior art;
FIG. 2 is a schematic structural diagram of a user cooperative relay transmission system in the prior art;
FIG. 3 is a schematic structural diagram of a user cooperative relay transmission system according to an embodiment of the present invention;
FIG. 4 is a schematic flow chart of a communications method according to an embodiment of the present invention;
FIG. 5 is a schematic flow chart of another communications method according to an embodiment of the present invention;
FIG. 6 is a schematic structural diagram of a user equipment according to an embodiment of the present invention;
FIG. 7 is a schematic diagram of an RRC connection setup procedure according to an embodiment of the present invention;
FIG. 8 is a schematic flow chart of another communications method according to an embodiment of the present invention;
FIG. 9 is a schematic flow chart of another communications method according to an embodiment of the present invention;
FIG. 10 is a schematic flow chart of another communications method according to an embodiment of the present invention;
FIG. 11 is a schematic flow chart of another communications method according to an embodiment of the present invention;
FIG. 12 is a schematic structural diagram of a core network device according to an embodiment of the present invention;
FIG. 13 is a schematic flow chart of another communications method according to an embodiment of the present invention;
FIG. 14 is a schematic structural diagram of another core network device according to an embodiment of the present invention;
FIG. 15 is a schematic flow chart of another communications method according to an embodiment of the present invention;
FIG. 16 is a schematic structural diagram of another core network device according to an embodiment of the present invention;
FIG. 17 is a schematic flow chart of another communications method according to an embodiment of the present invention;
FIG. 18 is a schematic structural diagram of an access network device according to an embodiment of the present invention;
FIG. 19 is a schematic structural diagram of another access network device according to an embodiment of the present invention;
FIG. 20 is a schematic structural diagram of another access network device according to an embodiment of the present invention;
FIG. 21 is a schematic structural diagram of another access network device according to an embodiment of the present invention; and
FIG. 22 is a schematic structural diagram of another access network device according to an embodiment of the present invention.

### DESCRIPTION OF EMBODIMENTS

In order to make the objectives, technical solutions, and advantages of the present invention more comprehensible, the technical solutions according to embodiments of the present invention are clearly and completely described in the following with reference to the accompanying drawings. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

An access network device in the following embodiments is a device for connecting a UE to a wireless network, and includes, but not limited to: an evolved base station (evolved Node B, eNB), a home base station (Home Node B, HNB), a radio network controller (radio network controller, RNC), a base station controller (Base Station Controller, BSC), and a base transceiver station (Base Transceiver Station, BTS). A core network (core network, CN) device is a device for connecting a service provider and an access network or connecting an access network and another access network, and has main functions including: providing a UE connection, managing the UE, bearing a service, and serving as a bearer network to provide an interface to an external network.

In the following embodiments, common components included in the access network device, core network device, and UE are not listed one by one. The common components include, but not limited to: a base band processing component, an intermediate radio frequency processing component, a transmission component, a processor, a memory, an antenna component, and an input/output apparatus. Each access network device may correspond to one or more cells. Each cell may serve one or more UEs. The UEs include, but not limited to: a mobile phone, a computer, a wireless communication module, and the like.

Referring to FIG. 3, a schematic structural diagram of a user cooperative relay transmission system according to an embodiment of the present invention is shown. As shown in the drawing, a UE1 to a UEn access a base station 120, and at this time, it is required to select a suitable UE from the UE1 to the UEn to serve as a relay node, so as to forward data between the base station 120 and a UE 110. In the prior art, the UE1 to the UEn are traversed by using a certain algorithm, and an optimal UE is selected to serve as the relay. Moreover, the industry mostly pays attention to the research of relay selection algorithms, and several relay selection algorithms have been applied, for example, traversing the UE1 to the UEn by using an end-to-end signal to interference plus noise ratio (signal to interference plus noise ratio, SINR) or an outage probability (Pout) as a rule, and selecting a UE having the lowest SINR or Pout to serve as the relay node. The relay node selection method requires traversing all UEs accessing the base station 120, and requires large time and resources overhead, thereby having low transmission efficiency.

Therefore, an embodiment of the present invention provides a communications method, where primary screening is performed first on all UEs accessing an access network device (for example, a base station) to obtain UEs that are capable of serving as candidate relay nodes, and then a relay node is selected from the UEs that are capable of serving as candidate relay nodes, so as to save operation overhead.

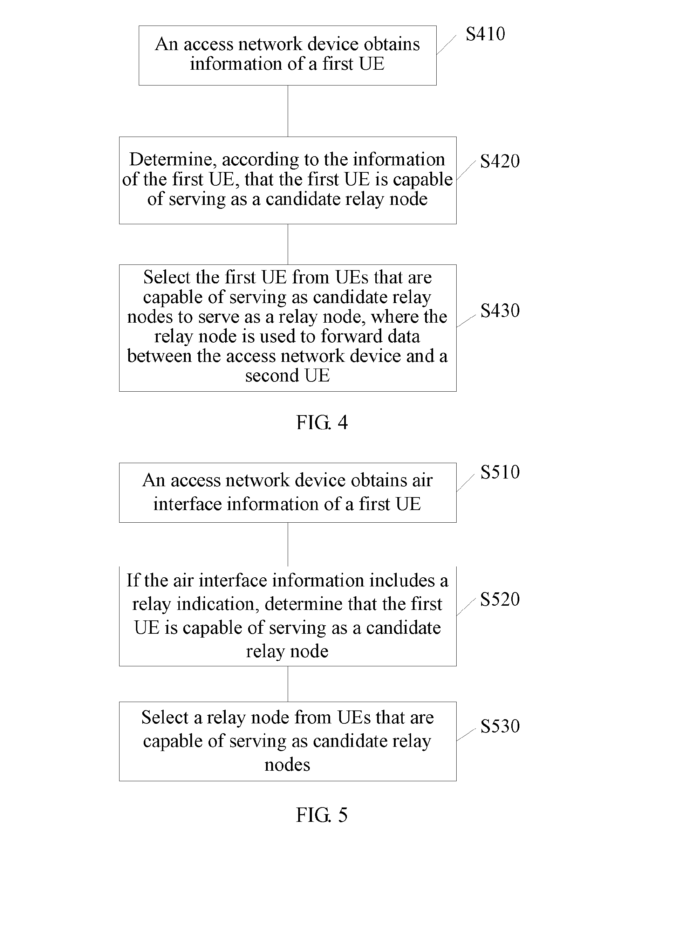

Referring to FIG. 4, a schematic flow chart of a communications method according to an embodiment of the present invention is shown. As shown in FIG. 4, the method may include:
S410: An access network device obtains information of a first UE;
S420: Determine, according to the information of the first UE, that the first UE is capable of serving as a candidate relay node; and
S430: Select the first UE from UEs that are capable of serving as candidate relay nodes to serve as a relay node, where the relay node is used to forward data between the access network device and a second UE.

In the foregoing method, the access network device first determines, according to the information of the first UE, whether the first UE is capable of serving as a candidate relay node, and after it is determined that the first UE is capable of serving as a candidate relay node, the first UE has the opportunity of being selected as the relay node in the subsequent relay node selection procedure. For a certain UE, for example, a third UE, if the access network device determines, according to information of the third UE, that the third UE is incapable of serving as a candidate relay node, the third UE is not taken into consideration in the subsequent relay node selection procedure, that is to say, it is unnecessary to perform a relay node selection operation on the third UE. For all UEs accessing the access network device, before relay node selection is performed, it is determined which UEs are capable of serving as candidate relay nodes, so as to perform the relay node selection operation only on the UEs that are capable of serving as candidate relay nodes when performing the relay node selection, thereby saving operation overhead, reducing time and resources overhead during the relay node selection, and improving transmission efficiency.

Preferably, the access network device may maintain a set of candidate relay nodes, the set of candidate relay nodes is composed of UEs capable of serving as candidate relay nodes, and preferably, may be stored in the access network device in the form of a UE identifier list. For example, the first UE determined in Step S420 is capable of serving as a candidate relay node, so that a UE identifier of the first UE can be added into the set of candidate relay nodes. For each UE accessing the access network device, it can be determined whether the UE is capable of serving as a candidate relay node when the UE accesses the access network device, the UE that is capable of serving as a candidate relay node is added into the set of candidate relay nodes, and the UE that is incapable of serving as a candidate relay node is not added into the set of candidate relay nodes. Therefore, when performing the relay node selection subsequently, it is only required to select a UE from the set of candidate relay nodes, without the need of traversing all the UEs in the coverage of the access network device, thereby saving the operation overhead. In addition, when the UE is disconnected from the access network device, the access network device may delete the UE from the set of candidate relay nodes, thereby avoiding unnecessary operation overhead.

When determining whether the UE is capable of serving as a candidate relay node, any one of the following two aspects may be used as a basis, and definitely, the two aspects may be considered integrally, which is not limited in this embodiment: first, whether the UE has a relay capability, that is, whether the hardware or software of the UE supports forwarding of data of another UE; second, whether the user subscribes to enable the UE to support relaying.

When the first aspect (whether the UE has a relay capability) is used as the basis, UEs that do not have the relay capability can be filtered out, so that UEs having the relay capability constitute the set of candidate relay nodes. Accordingly, when performing relay node selection subsequently, it is only needed to perform the relay node selection operation on the UEs in the set of candidate relay nodes, thereby saving operation time and system overhead.

When the second aspect (whether the user subscribes to enable the UE to support relaying) is used as the basis, UEs whose users do not subscribe to enable the UEs to support relaying can be filtered out, so that UEs whose users subscribe to enable the UEs to support relaying constitute the set of candidate relay nodes. Accordingly, when performing relay node selection subsequently, it is only needed to perform the relay node selection operation on the UEs in the set of candidate relay nodes, thereby saving the operation time and system overhead. A UE serving as a relay needs to forward data for another UE, which consumes the power thereof. In the prior art, user's willingness, that is, whether the user is willing to enable the UE thereof to serve as a relay for another user, is never taken into consideration. Therefore, when a candidate relay node is determined by using the second aspect as the basis, not only the operation overhead is saved, but also the user's willingness is taken into consideration, and an operator may adopt some preferential policies for the user willing to serve as a relay in terms of charges or services, thereby providing a more flexible service for the users.

Preferably, the first aspect and the second aspect may be combined to serve as the basis, so that UEs that do not have the relay capability and whose users do not subscribe to enable the UEs to support relaying are filtered out, thereby further narrowing the set of candidate relay nodes, further reducing the operation overhead, and providing a more flexible service for the users while considering the willingness of the users.

The procedure of determining a candidate relay node by using the first aspect (whether the UE has a relay capability) as the basis is described in detail as follows through accompanying drawings.

For the UE having the relay capability, a relay indication (relay indication) may be carried when accessing a wireless network, so as to notify the access network device that the UE is a UE having the relay capability, so that the access network device determines the UE sending the relay indication as a candidate relay node.

At this time, the information of the first UE in the method shown in FIG. 4 is air interface information, and if the first UE is a UE having the relay capability, the air interface information may include the relay indication. At this time, the method shown in FIG. 4 may be further specified into the procedure shown in FIG. 5:
S510: The access network device obtains the air interface information of the first UE;
S520: If the air interface information includes the relay indication, determine that the first UE is capable of serving as a candidate relay node; and
S530: Select a relay node from the UEs that are capable of serving as candidate relay nodes, for example, when it is calculated that the first UE has an optimal channel quality (for example, having the lowest SINR or Pout) by using a relay node selection algorithm, select the first UE as the relay node.

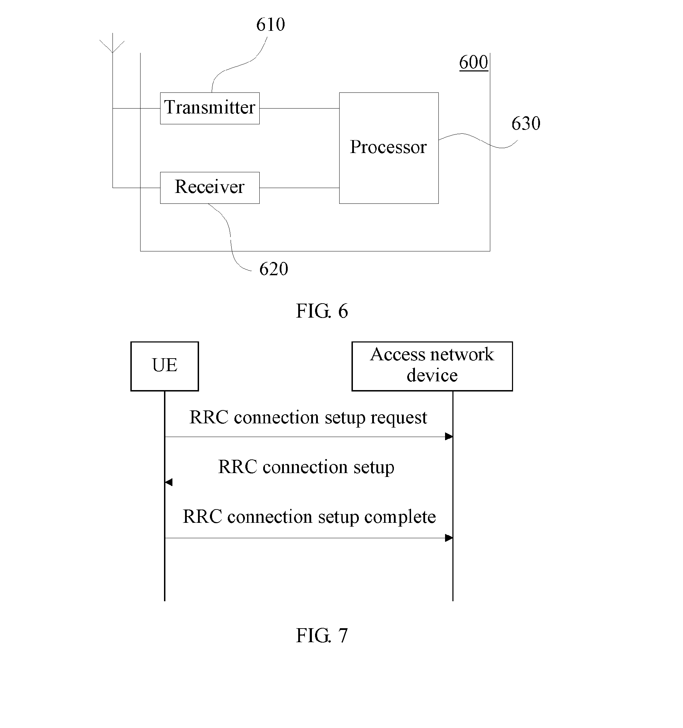

Accordingly, an embodiment of the present invention provides a UE. As shown in FIG. 6, the UE 600 includes a transmitter 610, a receiver 620, and a processor 630, where the transmitter 610 and the receiver 620 are connected to the processor 630. The transmitter 610 is configured to send data. The receiver 620 is configured to receive data. The processor 630 is configured to forward, through the transmitter 610, the data received by the receiver 620, including forwarding data received by the receiver from another UE to an access network device, or forwarding data received by the receiver from an access network device to another UE, or forwarding data received by the receiver from one UE to another UE, which is not limited in this embodiment. The processor 630 is further configured to send a relay indication to the access network device through the transmitter 610, and the relay indication is used to instruct the access network device to determine the UE 600 as a candidate relay node. Preferably, an information element for relay indication may be defined in an air interface protocol, and correspondingly, the processor 630 may send, according to the air interface protocol, air interface information carrying the relay indication to the access network device. For example, an information element for relay indication is added into a radio resource control (radio resource control, RRC) connection setup complete (RRC connection setup complete) message in the air interface protocol.

Corresponding to the UE 600 shown in FIG. 4, an embodiment of the present invention further provides a communications method, when the UE 600 having the relay capability accesses a wireless network, the UE 600 sends a relay indication to an access network device, where the relay indication is used to instruct the access network device to determine the UE 600 as a candidate relay node.

The accessing of the UE 600 to the wireless network may be implemented through an RRC connection setup procedure, as shown in FIG. 7, including: sending, by the UE 600, an RRC connection setup request to the access network device; after receiving the RRC connection setup request, setting up, by the access network device, an RRC connection, and sending an RRC connection setup message to the UE 600; after receiving the RRC connection setup message sent by the access network device, sending, by the UE 600, an RRC connection setup complete message to the access network device, where the RRC connection setup complete message includes the relay indication.

It can be seen that the UE 600 may carry the relay indication in the RRC connection setup complete message and send the message to the access network device.

The procedure of determining a candidate relay node by using the second aspect (whether the user subscribes to enable the UE to support relaying) as the basis is described in detail as follows through accompanying drawings. For ease of description, the UE subscribed by the user to support relaying is referred to as a subscribed UE.

It should be noted that the user subscribes to enable the UE thereof to support relaying with the premise that the UE has the relay capability. Alternatively, without the premise, although the UE of the user does not support the UE during subscription, the user may replace the UE during use, and if the UE after replacement has the relay capability, the UE after replacement is used as a subscribed UE. Definitely, in consideration that whether the UE of the user actually executes a relay function after the subscription, the subscription may be only performed on the UE having the relay capability. For ease of description, the following embodiments use the premise that a subscribed UE is a UE having the relay capability, but it is not limited whether the UE having the relay capability sends a relay indication when accessing a wireless network.

When the user subscribes to enable the UE thereof to support relaying, a relay identifier may be added into subscription information of the UE. Therefore, the subscription information of the subscribed UE includes the relay identifier, while subscription information of a non-subscribed UE does not include the relay identifier.

When a certain UE accesses the wireless network, the access network device may obtain subscription information of the UE, and further determine, according to whether the subscription information includes the relay identifier, whether the UE is a subscribed UE, and if the UE is a subscribed UE, determine the UE as a candidate relay node. Generally, the subscription information is stored at a core network side, so the access network device may obtain the subscription information of the UE from a core network device.

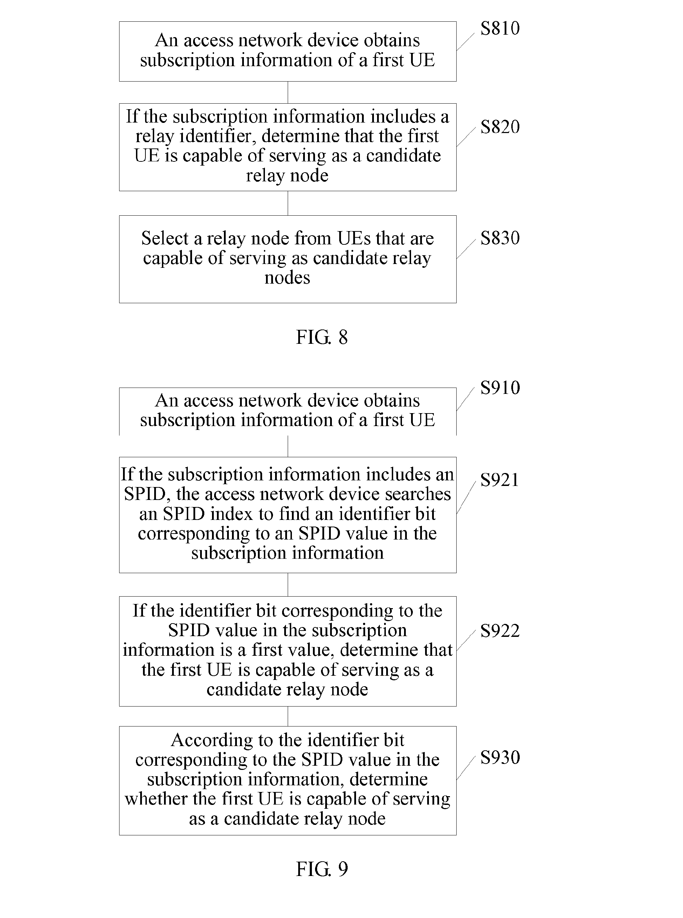

At this time, in the method shown in FIG. 4, the information of the first UE is subscription information, and if the first UE is a subscribed UE, the subscription information may include the relay identifier. At this time, the method shown in FIG. 4 may be further specified into the procedure shown in FIG. 8:
S810: The access network device obtains the subscription information of the first UE;
S820: If the subscription information includes the relay identifier, determine that the first UE is capable of serving as a candidate relay node; and
S830: Select a relay node from the UEs that are capable of serving as candidate relay nodes, for example, when it is calculated that the first UE has an optimal channel quality (for example, having the lowest SINR or Pout) by using a relay node selection algorithm, select the first UE as the relay node.

In addition to representing the subscribed UE by adding the relay identifier into the subscription information, the subscribed UE may also be represented by using identifier information already defined in the existing subscription information. Preferably, a subscriber profile identifier (subscriber profile ID SPID) may be selected.

The SPID is a user identifier defined by an operator, and has a current value range of 1-256, the specific meanings thereof may be defined by the operator, and currently, only some SPID values are defined to be used for resident priority and inter-frequency/inter-system switching priority. Therefore, some SPID values that are not used can be defined to represent the subscribed UE. However, a certain mechanism is required to distinguish the SPID representing the subscribed UE and the SPIDs representing other meanings such as the resident priority and inter-frequency/inter-system switching priority. Preferably, an SPID index may be established, the SPID index includes multiple SPID values, each SPID value corresponds to an identifier bit, and the identifier bit is used to identify whether the SPID value is used to represent the subscribed UE. A value of the identifier bit may be a first value or a second value. For example, the value of the identifier bit may be "1" or "0", respectively representing "True" and "False", where "True" represents an SPID value allocated to a subscribed UE, and "False" represents an SPID value allocated to a non-subscribed UE. Definitely, an SPID may not be allocated to the non-subscribed UE, and is only allocated when another function of the UE is involved (for example, the resident priority and inter-frequency/inter-system switching priority), but at this time, an identifier bit corresponding to the allocated SPID is "False". For example, Table 1 shows an SPID index, the SPID index includes SPID values 1-5, corresponding to 5 UEs and 5 identifier bits, where the identifier bits of the SPID values being 1 and 5 have the value "True", it indicates that the UE1 and UE5 are subscribed UEs, so the access network device may determine the UE1 and UE5 as candidate relay nodes.

**Table 1**

| UE | SPID Value | Identifier Bit |
|---|---|---|
| 1 | 1 | True |
| 2 | 2 | False |
| 3 | 3 | False |
| 4 | 4 | False |
| 5 | 5 | True |

It should be noted that the SPID index may be stored in the access network device, and may also be stored in the core network device. When the SPID index is stored in the core network device, the access network device needs to send a UE identifier to the core network device, so that the core network device searches for an SPID value corresponding to the UE according to the UE identifier, thereby searching the SPID index to find an identifier bit corresponding to the SPID value of the corresponding UE, where when the identifier bit has the value of "True", it indicates that the UE is a subscribed UE, so the core network device sends the relay indication to the access network device, so as to instruct the access network device to determine the UE as a candidate relay node.

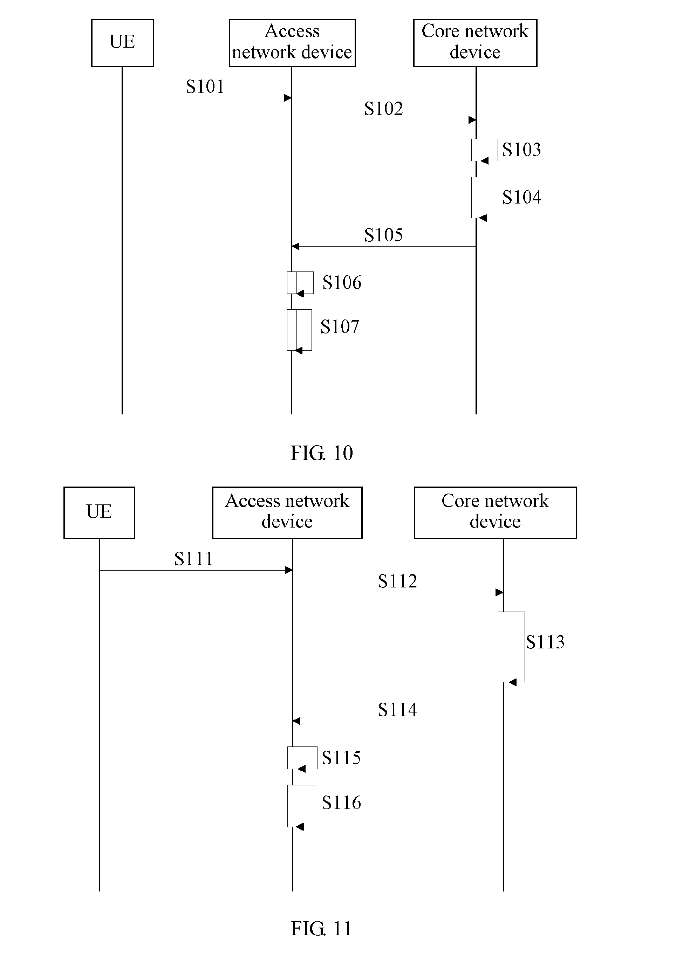

The method shown in FIG. 4 when the SPID index is stored in the access network device and in the core network device is further described in detail respectively in combination with FIG. 9 and FIG. 10.

As shown in FIG. 9, when the SPID index is stored in the access network device, the method shown in FIG. 4 may be further specified into the following procedure:
S910: The access network device obtains the subscription information of the first UE;
S921: If the subscription information includes an SPID, the access network device searches the SPID index to find an identifier bit corresponding to the SPID value in the subscription information;
S922: If the identifier bit corresponding to the SPID value in the subscription information is the first value, determine that the first UE is capable of serving as a candidate relay node; and
S930: Select a relay node from the UEs that are capable of serving as candidate relay nodes, for example, when it is calculated that the first UE has an optimal channel quality (for example, having the lowest SINR or Pout) by using a relay node selection algorithm, select the first UE as the relay node.

As shown in FIG. 10, when the SPID index is stored in the core network device, the method shown in FIG. 4 may be further specified into the following procedure:
S101: The access network device obtains a UE identifier of the first UE;
S102: Send the UE identifier of the first UE to the core network device;
S103: The core network device obtains subscription information of the first UE according to the UE identifier of the first UE;
S104: If the subscription information includes an SPID, the core network device searches the SPID index to find an identifier bit corresponding to the SPID value in the subscription information;
S105: If the identifier bit corresponding to the SPID value in the subscription information is the first value, the core network device sends a relay indication to the access network device;
S106: The access network device determines, according to the relay indication, that the first UE is capable of serving as a candidate relay node; and
S107: Select a relay node from the UEs that are capable of serving as candidate relay nodes, for example, when it is calculated that the first UE has an optimal channel quality (for example, having the lowest SINR or Pout) by using a relay node selection algorithm, select the first UE as the relay node.

In addition to representing a subscribed UE by adding a relay identifier into the subscription information and by using the already defined identifier information in the existing subscription information, the embodiment of the present invention may further maintain a subscribed UE identifier table at the core network side. When the user subscribes to enable the UE thereof to support relaying, the subscribed UE identifier table is updated, and a UE identifier of the subscribed UE is added into the table; and when the user cancels the subscription of enabling the UE thereof to support relaying, delete the UE identifier of the UE, whose subscription is canceled, from the subscribed UE identifier table.

Therefore, the access network device may send a UE identifier of a UE accessing the access network device to the core network device, and the core network device searches the subscribed UE identifier table for the UE identifier; if the UE identifier is found, it indicates that the UE is a subscribed UE, so the core network device may send the relay indication to the access network device, so as to instruct the access network device to determine the UE as a candidate relay node. At this time, the method shown in FIG. 4 may be further specified into the procedure shown in FIG. 11:
S111: The access network device obtains a UE identifier of the first UE;
S 112: Send the UE identifier of the first UE to the core network device;
S 113: The core network device searches the subscribed UE identifier table according to the UE identifier of the first UE, and if the core network device finds the UE identifier in the subscribed UE identifier table, the core network device determines that the first UE is a subscribed UE;
S 114: The core network device sends a relay indication to the access network device;
S 115: The access network device determines, according to the relay indication, that the first UE is capable of serving as a candidate relay node; and
S116: Select a relay node from the UEs that are capable of serving as candidate relay nodes, for example, when it is calculated that the first UE has an optimal channel quality (for example, having the lowest SINR or Pout) by using a relay node selection algorithm, select the first UE as the relay node.

In the embodiments shown in FIG. 10 and FIG. 11, the information of the first UE in the method shown in FIG. 4 is the UE identifier of the first UE, and the determining, according to the information of the first UE, whether the first UE is capable of serving as a candidate relay node, includes: sending, by the access network device, the UE identifier of the first UE to the core network device; receiving a response message sent by the core network device; and if the response message includes a relay indication, determining that the first UE is capable of serving as the candidate relay node, where the relay indication is sent when the core network device determines that the first UE is a subscribed UE.

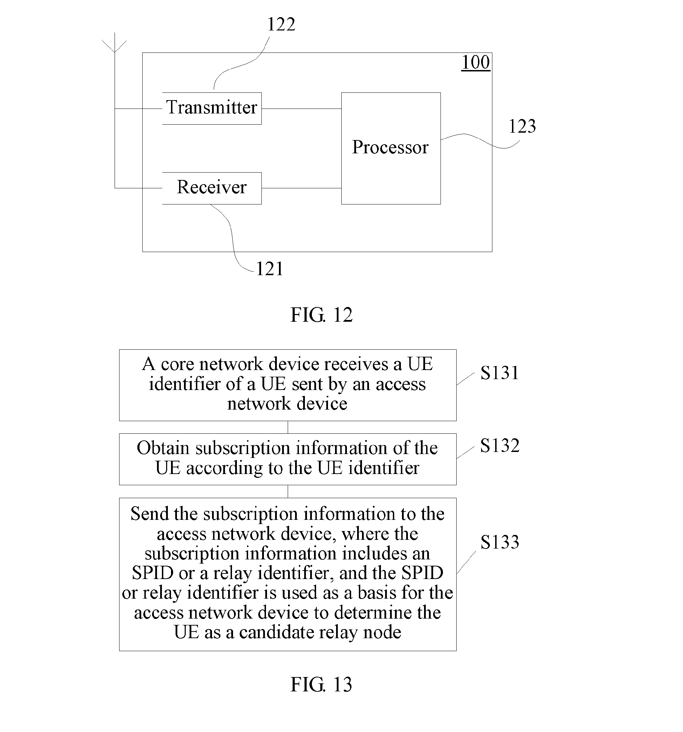

Referring to FIG. 12, an embodiment of the present invention further provides a core network device, configured to send subscription information to an access network device. As shown in FIG. 12, the core network device 100 includes a receiver 121, a transmitter 122, and a processor 123. The receiver 121 and the transmitter 122 are connected to the processor 123. The receiver 121 is configured to receive a UE identifier, sent by the access network device, of a UE (for example, a first UE) accessing the access network device. The processor 123 is configured to obtain corresponding subscription information (for example, subscription information of the first UE) according to the UE identifier received by the receiver 121. The subscription information may be stored in a server at the access network side (for example, a home subscriber server (home subscriber server, HSS)), and may also be stored in a storage in the core network device 100. The transmitter 122 is configured to send the subscription information obtained by the processor 123 to the access network device. For a subscribed UE, the subscription information thereof includes an SPID or a relay identifier, and the SPID or relay identifier is used as the basis for the access network device to determine the UE as a candidate relay node.

Referring to FIG. 13, corresponding to the core network device 100 in the embodiment shown in FIG. 12, an embodiment of the present invention further provides a communications method, which may include:
S131: The core network device 100 receives the UE identifier of the UE sent by the access network device;
S 132: Obtain the subscription information of the UE according to the UE identifier; and
S133: Send the subscription information to the access network device, where the subscription information includes an SPID or a relay identifier, and the SPID or relay identifier is used as the basis for the access network device to determine the UE as a candidate relay node.

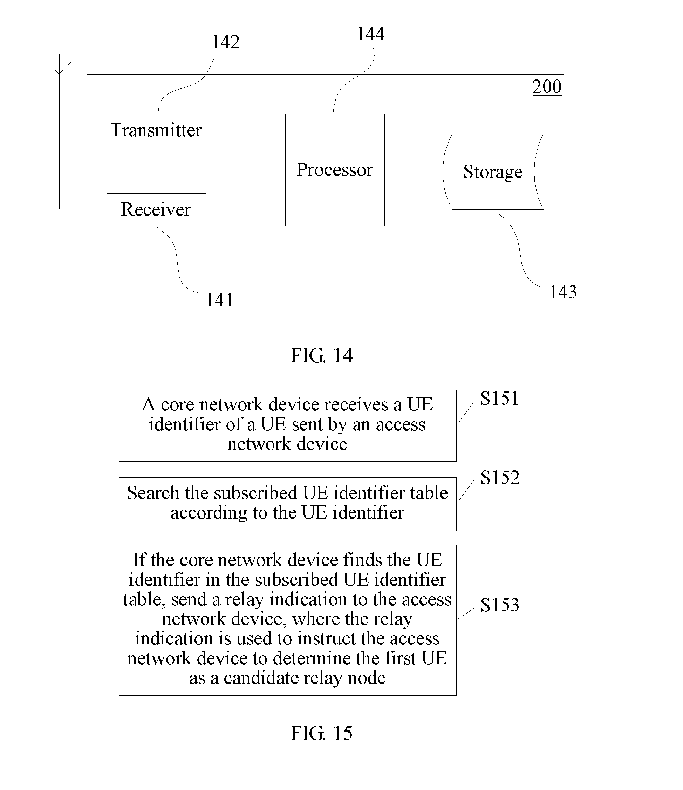

Referring to FIG. 14, an embodiment of the present invention further provides a core network device, configured to send a relay indication to an access network device. As shown in FIG. 14, the core network device 200 includes a receiver 141, a transmitter 142, a storage 143, and a processor 144. The receiver 141, transmitter 142, and storage 143 are connected to the processor 144. The receiver 141 is configured to receive a UE identifier, sent by the access network device, of a UE (for example, a first UE) accessing the access network device; the storage 143 stores a subscribed UE identifier table, and the processor 144 searches the subscribed UE identifier table according to the UE identifier received by the receiver 141; if the processor 144 finds the UE identifier in the subscribed UE identifier table, the processor 144 sends a relay indication to the access network device through the transmitter 122, where the relay indication is used to instruct the access network device to determine the UE as a candidate relay node.

Referring to FIG. 15, corresponding to the core network device 200 in the embodiment shown in FIG. 14, an embodiment of the present invention further provides a communications method, which may include:
S151: The core network device 200 receives the UE identifier of the UE sent by the access network device;
S152: Search the subscribed UE identifier table according to the UE identifier; and
S153: If the core network device 200 finds the UE identifier in the subscribed UE identifier table, send a relay indication to the access network device, where the relay indication is used to instruct the access network device to determine the first UE as a candidate relay node.

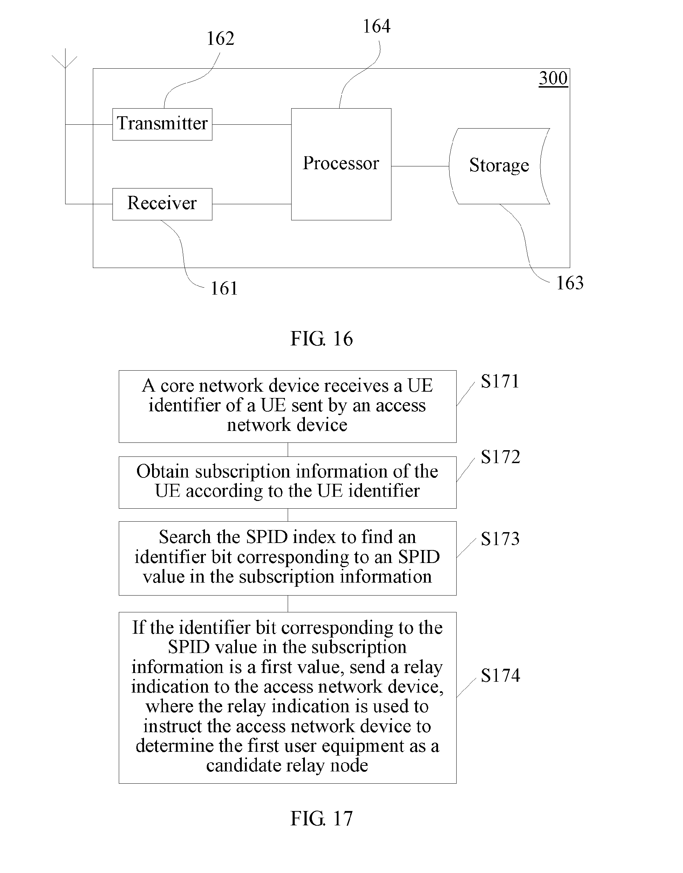

Referring to FIG. 16, an embodiment of the present invention further provides a core network device, configured to send a relay indication to an access network device. As shown in FIG. 16, the core network device 300 includes a receiver 161, a transmitter 162, a storage 163, and a processor 164. The receiver 161, transmitter 162, and storage 163 are connected to the processor 164. The receiver 161 is configured to receive a UE identifier, sent by the access network device, of a UE (for example, a first UE) accessing the access network device; the storage 163 stores the SPID index as described above; the processor 164 is configured to obtain corresponding subscription information (for example, subscription information of the first UE) according to the UE identifier; the processor 164 is further configured to search the SPID index to find an identifier bit corresponding to an SPID value in the subscription information, and according to the identifier bit corresponding to the SPID value in the subscription information, the processor 164 is further configured to, when the identifier bit corresponding to the SPID value in the subscription information is the first value, send a relay indication to the access network device through the transmitter 162, where the relay indication is used to instruct the access network device to determine the UE as a candidate relay node.

Referring to FIG. 17, corresponding to the core network device 300 in the embodiment shown in FIG. 16, an embodiment of the present invention further provides a communications method, which may include:
S171: The core network device 300 receives the UE identifier of the UE sent by the access network device;
S 172: Obtain the subscription information of the UE according to the UE identifier;
S173: Search the SPID index to find the identifier bit corresponding to the SPID value in the subscription information; and
S174: If the identifier bit corresponding to the SPID value in the subscription information is the first value, send a relay indication to the access network device, where the relay indication is used to instruct the access network device to determine the first user equipment as a candidate relay node.

It should be noted that the embodiment of the present invention may use the first aspect (whether the UE has a relay capability) or the second aspect (whether the user subscribes to enable the UE to support relaying) as the basis separately, and may also use the first aspect and the second aspect in combination as the basis.

In addition, the specific methods of determining a candidate relay node by using the first aspect and second aspect may be used together or may be used alternatively to serve as the basis for determining the candidate relay node. For example, if the method of identifying a corresponding UE as a UE having the relay capability by adding the relay indication into the air interface information is used separately, UEs having the air interface information including the relay indication may be determined as candidate relay nodes, and UEs having the air interface information excluding the relay indication do not serve as candidate relay nodes. If the method of identifying a corresponding UE as a UE having the relay capability by adding the relay indication into the air interface information is used in combination with the method of identifying whether the corresponding UE is a subscribed UE by using subscription information, UEs both having air interface information including the relay indication and subscription information including the relay identifier are determined as candidate relay nodes, and UEs having air interface information excluding the relay identifier or UEs having subscription information including the relay identifier do not serve as candidate relay nodes. Definitely, the two methods may coexist, but be used separately, and therefore a UE having air interface information excluding the relay identifier cannot be determined to be incapable of serving as a candidate relay node immediately, and whether the subscription information thereof includes the relay identifier needs to be further determined. If the subscription information includes the relay identifier, the UE can also be determined as a candidate relay node; and if the subscription information does not include the relay identifier, it is determined that the UE is incapable of serving as a candidate relay node. Definitely, when multiple determination bases coexist and are used separately, only when all the bases are not satisfied, it is determined that the UE is incapable of serving as a candidate relay node.

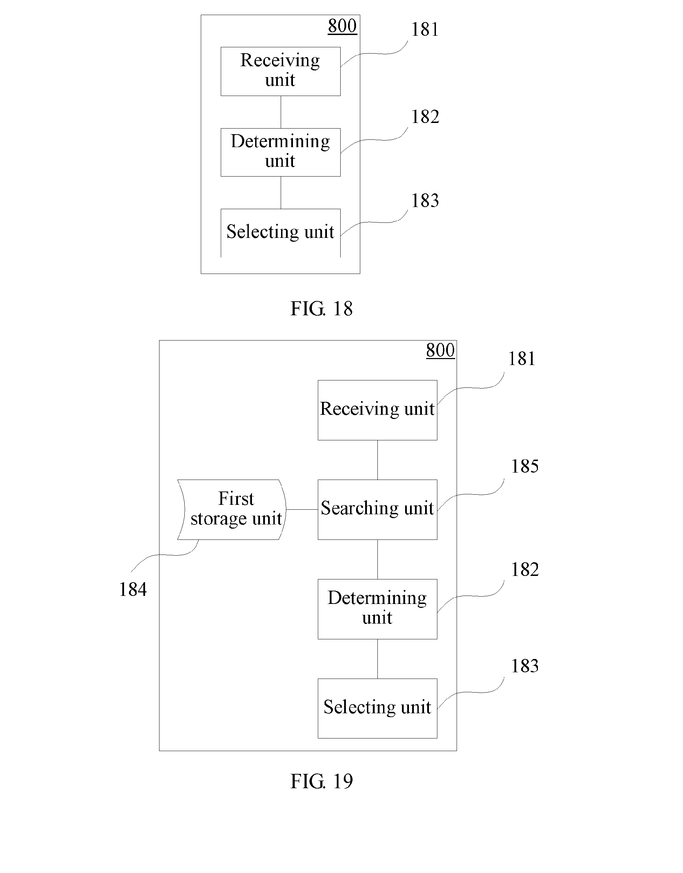

Referring to FIG. 18, a schematic structural diagram of an access network device according to an embodiment of the present invention is shown. As shown in FIG. 18, the access network device 800 includes a receiving unit 181, a determining unit 182, and a selecting unit 183. The receiving unit 181 is configured to obtain information of a first UE; the determining unit 182 is configured to determine, according to the information of the first UE, that the first UE is capable of serving as a candidate relay node; and the selecting unit 183 is configured to select the first UE from UEs that are capable of serving as candidate relay nodes to serve as a relay node, where the relay node is used to forward data between the access network device and a second UE.

It can be seen that the access network device 800 first determines, according to the information of the first UE, whether the first UE is capable of serving as a candidate relay node, and after it is determined that the first UE is capable of serving as a candidate relay node, the first UE has the opportunity of being selected as the relay node in the subsequent relay node selection procedure. For a certain UE, for example, a third UE, if the access network device 800 determines, according to information of the third UE, that the third UE is incapable of serving as a candidate relay node, the third UE is not taken into consideration in the subsequent relay node selection procedure, that is to say, it is unnecessary to perform a relay node selection operation on the third UE. For all UEs accessing the access network device 800, before relay node selection is performed, it is determined which UEs are capable of serving as candidate relay nodes, so as to perform the relay node selection operation only on the UEs that are capable of serving as candidate relay nodes when performing the relay node selection, thereby saving operation overhead, reducing time and resources overhead during the relay node selection, and improving transmission efficiency.

Like the method embodiment shown in FIG. 5, the information of the first UE may include the air interface information, and the determining unit 182 is further configured to, when the air interface information includes the relay indication, determine that the first UE is capable of serving as a candidate relay node.

Like the method embodiment shown in FIG. 8, the information of the first UE may include the subscription information, and at this time, the determining unit 182 is further configured to, when the subscription information includes the relay identifier, determine that the first UE is capable of serving as a candidate relay node.

Like the method embodiment shown in FIG. 9, in addition to representing a subscribed UE by adding the relay identifier into the subscription information, the subscribed UE may also be represented by using the identifier information already defined in the existing subscription information, for example, the SPID. Referring to FIG. 19, at this time, the access network device 800 may further include a first storage unit 184 and a searching unit 185, where the first storage unit 184 is configured to store the SPID index described above, and the searching unit 185 is configured to, when the subscription information of the first UE includes the SPID, search the SPID index stored in the first storage unit 184, so as to find an identifier bit corresponding to the SPID value in the subscription information. The determining unit 182 is further configured to, when the identifier bit corresponding to the SPID value in the subscription information is the first value, determine that the first UE is capable of serving as a candidate relay node.

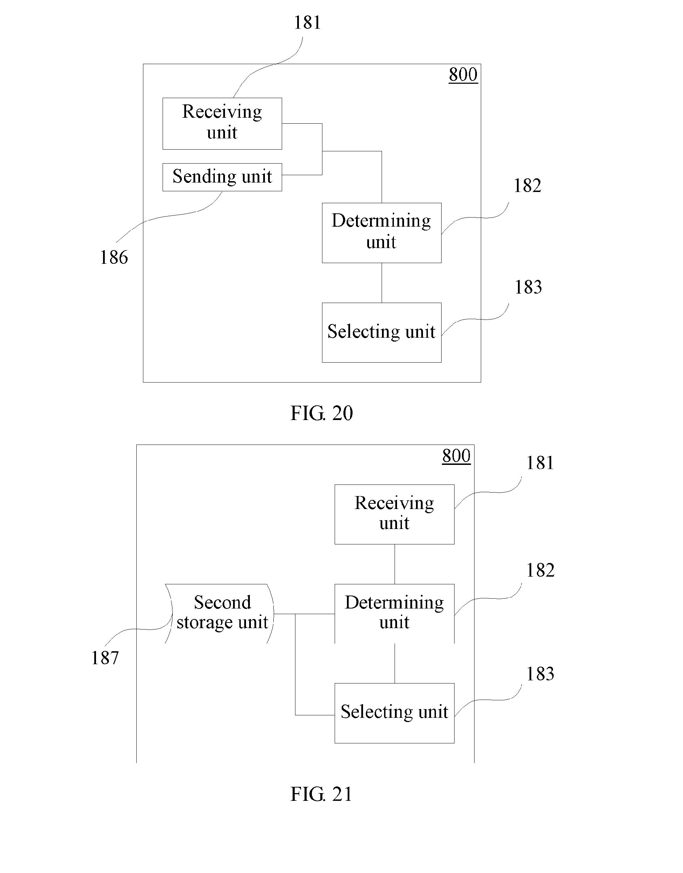

Like the method embodiment shown in FIG. 10 or FIG. 11, the information of the first UE may include the UE identifier of the first UE. Referring to FIG. 20, at this time, the access network device 800 further includes a sending unit 186, configured to send the UE identifier of the first UE to the core network device. The receiving unit 181 is further configured to receive a response message sent by the core network device. The determining unit 182 is further configured to, when the response message includes a relay indication, determine that the first UE is capable of serving as a candidate relay node. Correspondingly, the core network device needs to determine, according to the UE identifier of the first UE, whether the first UE is a subscribed UE, so as to send the response message carrying the relay indication when the first UE is a subscribed UE; at this time, the core network device stores the SPID index or subscribed UE identifier table, and the procedure of determining, by the core network device, whether the first UE is a subscribed UE is the same as that in the foregoing method embodiment, and is not repeated herein.

Referring to FIG. 21, in a preferred embodiment, the access network device 800 further includes a second storage unit 187, configured to store the set of candidate relay nodes described above. The determining unit 182 is further configured to add the first UE determined to be capable of serving as a candidate relay node into the set of candidate relay nodes; and the selecting unit 183 is further configured to select a relay node from the set of candidate relay nodes. Further, the determining unit 182 is further configured to, when the first UE is disconnected from the access network device 800, delete the first UE from the set of candidate relay nodes.

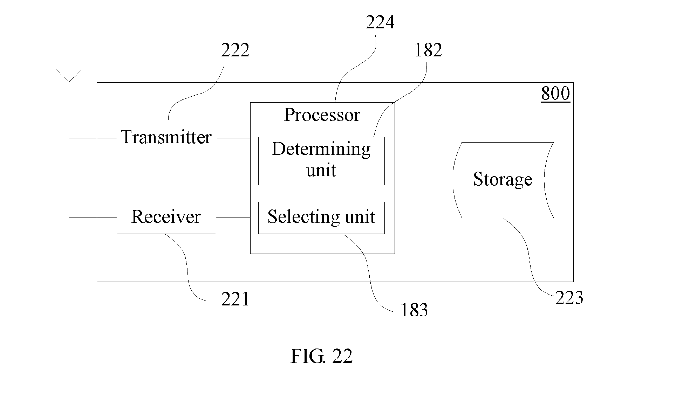

Referring to FIG. 22, the access network device 800 includes a receiver 221, a transmitter 222, a storage 223, and a processor 224. It should be noted that the receiving unit 181 may be a receiver; the sending unit 186 may be a transmitter; the first storage unit 184 and the second storage unit 187 may be the same storage 223. The determining unit 182 and the selecting unit 183 may be embedded in the processor 224, and likewise, the searching unit 185 may also be embedded in the processor 224. The units embedded in the processor 224 may exist in the form of program codes, and functions thereof are implemented by invoking through the processor 224; and the units may also exist in the form of hardware logic entities, which is not limited in this embodiment.

Those of ordinary skill in the art should understand that all or a part of the steps of the method according to the embodiments of the present invention may be implemented by a hardware module or a combination of hardware modules, a combination of a process and a chip set such as a memory, or a program instructing relevant hardware, processor and chip set. The program may be stored in a computer readable storage medium. The storage medium may be any medium that is capable of storing program codes, such as a read-only memory (ROM, Read-Only Memory), a random access memory (RAM, Random Access Memory), a magnetic disk, and an optical disk.

A computer program product according to an embodiment of the present invention includes a computer readable medium, where the readable medium includes a group of program codes, and is configured to execute any communications method provided in the method embodiments.

Another communications system according to an embodiment of the present invention includes: a first UE, an access network device, and a second UE. The access network device has any structure as shown in FIG. 18 to FIG. 22, and is configured to determine whether a first UE is capable of serving as a candidate relay node and select a UE to serve as a relay node from all UEs that are capable of serving as candidate relay nodes, so as to forward data between the access network device and the second UE.

Finally, it should be noted that the above embodiments are merely provided for describing the technical solutions of the present invention, but not intended to limit the present invention. It should be understood by persons of ordinary skill in the art that although the present invention has been described in detail with reference to the embodiments, modifications can be made to the technical solutions described in the embodiments, or equivalent replacements can be made to some technical features in the technical solutions, as long as such modifications or replacements do not cause the essence of corresponding technical solutions to depart from the spirit and scope of the present invention.

## Claims

1. A communications method, comprising:
obtaining, by an access network device, information of a first user equipment;
determining, according to the information of the first user equipment, that the first user equipment is capable of serving as a candidate relay node; and
selecting the first user equipment to serve as a relay node, wherein the relay node is used to forward data between the access network device and a second user equipment.

2. The method according to claim 1, wherein the information of the first user equipment comprises subscription information, and the determining, according to the information of the first user equipment, that the first user equipment is capable of serving as a candidate relay node, comprises:
if the subscription information comprises a relay identifier, determining, by the access network device, that the first user equipment is capable of serving as a candidate relay node.

3. The method according to claim 1, wherein the access network device stores a subscriber profile identifier SPID index, the SPID index comprises at least one SPID value, each SPID value in the at least one SPID value corresponds to an identifier bit, the identifier bit is used to identify whether a corresponding SPID value is used to represent a subscribed user equipment, the information of the first user equipment comprises subscription information, and the determining, according to the information of the first user equipment, that the first user equipment is capable of serving as a candidate relay node, comprises:
if the subscription information comprises an SPID, searching, by the access network device, the SPID index to find an identifier bit corresponding to the SPID value in the subscription information; and
determining, according to the identifier bit corresponding to the SPID value in the subscription information, that the first user equipment is capable of serving as a candidate relay node.

4. The method according to claim 1, wherein the information of the first user equipment comprises a user equipment identifier of the first user equipment, and the determining, according to the information of the first user equipment, that the first user equipment is capable of serving as a candidate relay node, comprises:
sending, by the access network device, the user equipment identifier to a core network device;
receiving a response message sent by the core network device; and
if the response message comprises a relay indication, determining that the first user equipment is capable of serving as a candidate relay node.

5. The method according to claim 4, wherein the relay indication is sent after the core network device determines, according to the user equipment identifier and an SPID index stored in the core network device, that the first user equipment is a subscribed user equipment.

6. The method according to claim 4, wherein the relay indication is sent after the core network device determines, according to the user equipment identifier and a subscribed user equipment identifier table stored in the core network device, that the first user equipment is a subscribed user equipment.

7. The method according to claim 1, wherein the information of the first user equipment comprises air interface information, and if the air interface information comprises a relay indication, the access network device determines that the first user equipment is capable of serving as a candidate relay node.

8. The method according to any one of claims 1 to 7, wherein the access network device stores a set of candidate relay nodes, and the method further comprises:
adding, by the access network device, the first user equipment that is capable of serving as a candidate relay node into the set of candidate relay nodes, so as to select a relay node from the set of candidate relay nodes.

9. The method according to claim 8, further comprising:
when the first user equipment is disconnected from the access network device, deleting, by the access network device, the first user equipment from the set of candidate relay nodes.

10. A communications method, comprising:
sending, by a first user equipment, a relay indication to an access network device, wherein the first user equipment has a relay capability, and the relay indication is used to instruct the access network device to determine the first user equipment as a candidate relay node; and
if the first user equipment is selected by the access network device to serve as a relay node, forwarding, by the first user equipment, data transmitted between the access network device and a second user equipment.

11. The method according to claim 10, further comprising:
sending, by the user equipment, a radio resource control RRC connection setup request to the access network device;
receiving an RRC connection setup message sent by the access network device; and
sending an RRC connection setup complete message to the access network device, wherein the RRC connection setup complete message comprises the relay indication.

12. A communications method, comprising:
receiving, by a core network device, a user equipment identifier of a user equipment sent by an access network device; and
sending, according to the user equipment identifier, a response message to the access network device, wherein the response message is used as a basis for the access network device to determine the user equipment as a candidate relay node.

13. The method according to claim 12, wherein the sending, according to the user equipment identifier, a response message to the access network device, comprises:
obtaining, according to the user equipment identifier, subscription information of the user equipment; and
sending the response message to the access network device, wherein the response message comprises the subscription information, the subscription information comprises an SPID or a relay identifier, and the SPID or relay identifier is used as a basis for the access network device to determine the user equipment as a candidate relay node.

14. The method according to claim 12, wherein the core network device stores a subscribed user equipment identifier table, and the sending, according to the user equipment identifier, a response message to the access network device, comprises:
searching the subscribed user equipment identifier table according to the user equipment identifier; and
if the core network device finds the user equipment identifier in the subscribed user equipment identifier table, sending the response message to the access network device, wherein the response message comprises a relay indication, and the relay indication is used to instruct the access network device to determine the user equipment as a candidate relay node.

15. The method according to claim 12, wherein the core network device stores an SPID index, the SPID index comprises at least one SPID value, each SPID value in the at least one SPID value corresponds to an identifier bit, the identifier bit is used to identify whether a corresponding SPID value is used to represent a subscribed user equipment, and the sending, according to the user equipment identifier, a response message to the access network device, comprises:
obtaining, according to the user equipment identifier, subscription information of the user equipment;
finding, in the SPID index, an identifier bit corresponding to the SPID value in the subscription information; and
sending, according to the identifier bit corresponding to the SPID value in the subscription information, a relay indication to the access network device, wherein the relay indication is used to instruct the access network device to determine the user equipment as a candidate relay node.

16. An access network device, comprising:
a receiving unit, configured to obtain information of a first user equipment;
a determining unit, configured to determine, according to the information of the first user equipment, that the first user equipment is capable of serving as a candidate relay node; and
a selecting unit, configured to select the first user equipment as a relay node, wherein the relay node is used to forward data between the access network device and a second user equipment.

17. The access network device according to claim 16, wherein the information of the first user equipment comprises subscription information, and the determining unit is further configured to, when the subscription information comprises a relay identifier, determine that the first user equipment is capable of serving as a candidate relay node.

18. The access network device according to claim 16, wherein the information of the first user equipment comprises subscription information, and the access network device further comprises:
a first storage unit, configured to store an SPID index, wherein the SPID index comprises at least one SPID value, each SPID value in the at least one SPID value corresponds to an identifier bit, and the identifier bit is used to identify whether a corresponding SPID value is used to represent a subscribed user equipment; and
a searching unit, configured to, when the subscription information comprises an SPID, search the SPID index to find an identifier bit corresponding to the SPID value in the subscription information, wherein
the determining unit is further configured to determine, according to the identifier bit corresponding to the SPID value in the subscription information, that the first user equipment is capable of serving as a candidate relay node.

19. The access network device according to claim 16, wherein the information of the first user equipment comprises a user equipment identifier of the first user equipment, and the access network device further comprises:
a sending unit, configured to send the user equipment identifier to a core network device, wherein
the receiving unit is further configured to receive a response message sent by the core network device; and
the determining unit is further configured to, when the response message comprises a relay indication, determine that the first user equipment is capable of serving as a candidate relay node.

20. The access network device according to claim 19, wherein the relay indication is sent when the core network device determines, according to the user equipment identifier and an SPID index stored in the core network device, that the first user equipment is a subscribed user equipment.

21. The access network device according to claim 19, wherein the relay indication is sent when the core network device determines, according to the user equipment identifier and a subscribed user equipment identifier table stored in the core network device, that the first user equipment is a subscribed user equipment.

22. The access network device according to claim 16, wherein the information of the first user equipment comprises air interface information, and the determining unit is further configured to, when the air interface information comprises the relay indication, determine that the first user equipment is capable of serving as a candidate relay node.

23. The access network device according to any one of claims 16 to 22, further comprising:
a second storage unit, configured to store a set of candidate relay nodes, wherein
the determining unit is further configured to add the first user equipment determined to be capable of serving as a candidate relay node into the set of candidate relay nodes; and
the selecting unit is further configured to select a relay node from the set of candidate relay nodes.

24. The access network device according to claim 23, wherein the determining unit is further configured to, when the first user equipment is disconnected from the access network device, delete the first user equipment from the set of candidate relay nodes.

25. A user equipment, comprising a receiver, a transmitter, and a processor, wherein the receiver and the transmitter are connected to the processor;
the processor is configured to send a relay indication to an access network device through the transmitter, wherein the relay indication is used to instruct the access network device to determine the user equipment as a candidate relay node; and
if the user equipment is selected by the access network device to serve as a relay node, when forwarding data transmitted between the access network device and another user equipment, the receiver is configured to receive data sent by the access network device or the other user equipment; and the transmitter is configured to send the data received by the receiver to the other user equipment or the access network device.

26. The user equipment according to claim 25, wherein the processor sends the relay indication by using an RRC connection setup complete message.

27. A core network device, comprising:
a receiver, configured to receive a user equipment identifier of a user equipment sent by an access network device;
a transmitter, configured to send a response message to the access network device; and
a processor, configured to generate the response message according to the user equipment identifier, wherein the response message is used as a basis for the access network device to determine the user equipment as a candidate relay node.

28. The core network device according to claim 27, wherein the processor is further configured to obtain, according to the user equipment identifier, subscription information of the user equipment, and generate the response message comprising the subscription information.

29. The core network device according to claim 27, further comprising:
a storage, configured to store a subscribed user equipment identifier table, wherein
the processor is further configured to search the subscribed user equipment identifier table according to the user equipment identifier; and if the processor finds the user equipment identifier in the subscribed user equipment identifier table, the processor is further configured to generate the response message comprising a relay indication, and the relay indication is used to instruct the access network device to determine the user equipment as a candidate relay node.

30. The core network device according to claim 27, comprising:
a storage, configured to store an SPID index, wherein the SPID index comprises at least one SPID value, each SPID value in the at least one SPID value corresponds to an identifier bit, and the identifier bit is used to identify whether a corresponding SPID value is used to represent a subscribed user equipment; and
the processor is further configured to obtain, according to the user equipment identifier, subscription information of the user equipment, the processor is further configured to search the SPID index to find an identifier bit corresponding to an SPID value in the subscription information, and is further configured to generate, according to the identifier bit corresponding to the SPID value in the subscription information, the response message comprising a relay indication, and the relay indication is used to instruct the access network device to determine the user equipment as a candidate relay node.

31. A communications system, comprising a first user equipment, the access network device according to any one of claims 16 to 24, and a second user equipment.

32. A computer program product, comprising a computer readable medium, wherein the readable medium comprises a group of program codes and is used to execute the communications method according to any one of claims 1 to 15.
